# EUROPEAN PATENT SPECIFICATION

(11) **EP 0 747 213 B1**
(45) Date of publication and mention of the grant of the patent: **16.10.2002**
(21) Application number: 95108715.4
(22) Date of filing: 07.06.1995
(51) Int. Cl.: B32B 31/08, B32B 31/30, B32B 27/32, B32B 27/12

(54) **Composite panel of plastic material, and process and device for its fabrication**
Verbundplatte aus thermoplastischem Material, sowie Herstellungsverfahren und -vorrichtung dafür
Panneau composite en matériau thermoplastique, procédé et dispositif de fabrication

(43) Date of publication of application: 11.12.1996
(73) Proprietor: G.O.R. Applicazioni Speciali S.p.A., 10060 Buriasco, Torino (IT)
(72) Inventor: Gentilcore, Ezio, I-10064 Pinerolo (Prov. of Torino) (IT); Odino, Adriano, I-10060 Angrona (Prov. of Torino) (IT)
(74) Representative: Karaghiosoff, Giorgio A.

(56) References cited:
- EP-A- 0 472 436
- AT-B- 309 052
- DE-A- 2 727 285
- US-A- 3 669 794
- US-A- 5 298 319
- DATABASE WPI Week 8608 Derwent Publications Ltd., London, GB; AN 86-052287 & JP-A-61 005 933 (TAKEHIRO MOKUZAI KO) , 11 January 1986
- DATABASE WPI Week 8111 Derwent Publications Ltd., London, GB; AN 81-18548D & JP-A-56 005 729 (KAWANISHI KOGYO KK) , 21 January 1981
- PATENT ABSTRACTS OF JAPAN vol. 10 no. 315 (M-529) ,25 October 1986 & JP-A-61 125834 (KASAI KOGYO CO LTD) 13 June 1986,
- DATABASE WPI Week 8834 Derwent Publications Ltd., London, GB; AN 88-238030 & JP-A-63 170 032 (KASAI KOGYO KK) , 13 July 1988
- PATENT ABSTRACTS OF JAPAN vol. 11 no. 321 (M-633) ,20 October 1987 & JP-A-62 104737 (TOYOTA MOTOR CORP) 15 May 1987,
- PATENT ABSTRACTS OF JAPAN vol. 4 no. 171 (M-044) ,26 November 1980 & JP-A-55 121020 (KASAI KOGYO CO LTD) 17 September 1980,
- DATABASE WPI Week 9248 Derwent Publications Ltd., London, GB; AN 92-396268 & RO-A-101 227 (INST CERC PRELUC CAUCIUCULUI MASELOOR, INTR CHIMICA) , 30 April 1991

## Description

The invention relates to a composite panel of plastic material, according to the preamble of claim 1.

JP-A-61005933, JP-A-56005729, JP-A-61125834, JP-A-63170032 disclose a composite panel of plastic material comprising at least one layer of filled thermoplastic material and at least one additional layer consisting at least partially of fibrous thermoplastic material, this additional layer being applied to one face of the layer of filled thermoplastic material. The bonding occurs either only mechanically or by means of lamination by compression under heat.

EP-A-0472436 discloses an analogous panel in which an intermediate layer of polypropylene is used as an adhesive sheet for connecting the layer of filled thermoplastic material to the layer of fibrous material.

DE-A-2727285 discloses a method for bonding a layer of fibrous fabric material to a base layer of filled thermoplastic material, in which the base layer is extruded and to this extruded base layer the fabric layer is bonded by means of heated pressing drums through which the two superimposed layers are driven.

The object of the invention is-to provide a panel of the type indicated above, which is easily fabricated and relatively economical and which makes it possible to improve the mechanical and/or aesthetic properties of composite panels, while keeping unchanged the known characteristics of the said panels, in particular the good thermoforming or moulding characteristics.

The invention is also intended to provide a process of fabrication of the said panels which can be used without seriously complicating the known processes of fabrication of said panels and/or without increasing the duration of the process, while limiting to a minimum the work required to adapt existing devices for the fabrication of said panels.

The invention achieves the above objects with a panel of plastic material according to the preamble of claim 1 and showing the features of the characterising part of claim 1.

The additional layer comprising the plasticized fibrous thermoplastic material may consist of: a felt of thermoplastic fibres, short or long, with random orientation; a fabric or non-woven fabric of fibres of thermoplastic material; a felt, fabric or non-woven fabric of mixtures of fibres of thermoplastic material and of other synthetic and/or natural materials; or thermoplastic lattices, glass fibres, or similar.

Preferably, in order to obtain a good chemical bond between the two layers, the additional layer of fibrous thermoplastic material may comprise at least one partial component of polypropylene.

The invention also relates to a process for the fabrication of the composite panel of plastic material described initially, comprising the steps defined in the characterizing part of claim 8.

Further improvements of the process are defined in claims 9 to 13.

According to an improvement of the composite panel, a layer containing plasticized fibrous thermoplastic material may be provided on both faces of the panel of filled polypropylene.

As an alternative to the second layer containing the fibrous thermoplastic material, a polypropylene film may be applied to the said panel. The second layer of plasticized fibrous thermoplastic material or polypropylene film is applied to the panel of filled polypropylene by the same process as that used for the first additional layer containing fibrous thermoplastic material, and in particular by compression of the layers against the said panel with simultaneous heating, especially at the stage of calendering the said panel in the same calendering pass in which the first layer containing the fibrous thermoplastic material is applied, or in a subsequent calendering pass.

The invention also provides equipment for the fabrication of the panel of plastic material and for the application of the previously mentioned fabrication process which will be described subsequently.

The advantages of the invention will be clearly understood from the above description. The composite panel of thermoplastic material not only has excellent thermal deformability and a smooth and plasticized exterior appearance, but also has a somewhat higher degree of mechanical strength than the known panel, owing to the partial retention of the fibrous structure. Moreover, the use of thermoplastic fibres consisting to a large extent of polypropylene makes the composite panel recyclable to a large extent. The process is extremely simple and does not require complicated arrangements or an extension of the manufacturing cycle. The device for the application of the process may also be made as a simple and inexpensive addition or modification to existing installations for the fabrication of conventional panels of filled polypropylene.

The invention also relates to other characteristics which further improve the composite panel of thermoplastic material, the process and the device for its fabrication as mentioned above, and which form the subject of the subsidiary claims.

The particular characteristics of the invention and the advantages derived therefrom will be understood in greater detail from the description of some preferred embodiments, illustrated by way of example and without restriction in the attached drawings, in which
Figs. 1 and 2 show two variant embodiments of equipment for the fabrication of a composite panel of plastic material according to the invention.
Fig. 3 shows a detail of the two layers of Woodstock and fibrous thermoplastic material before they are fixed together.
Fig. 4 shows in a similar way to Fig. 3 a detail of the panel after the fixing together of the layers of Woodstock and of fibrous thermoplastic material.

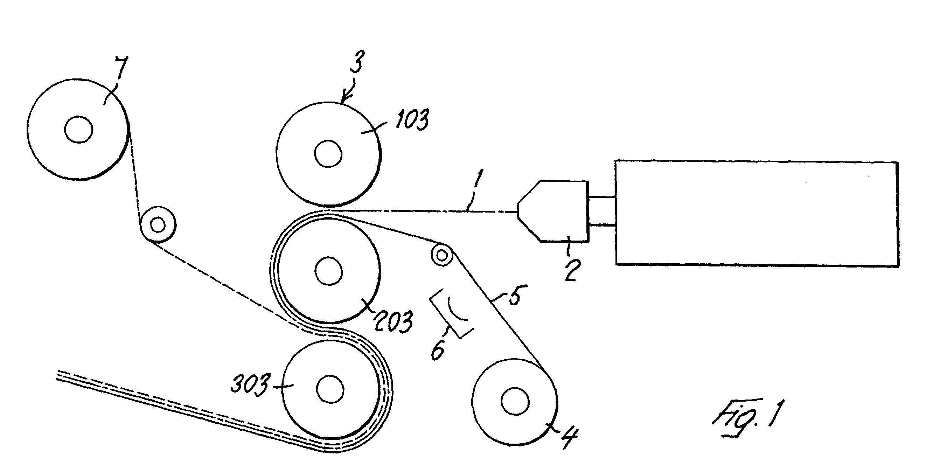

With reference to Fig. 1, a panel 1 of polypropylene filled with wood flour and/or sawdust and/or wood shavings or similar, known as Woodstock, is extracted from an extrusion aperture 2 and fed between two calendar rollers 103, 203 of a following calender 3. The two calender rollers 103, 203 are parallel to each other, are heated to specified temperatures, and exert a predetermined pressure on the panel 1; they are also rotated in opposite directions to each other.

The ratio of the thickness of the panel 1 to the aperture between the lips of the drawing machine is preferably between 1:1 or 1.5:1 and 4:1, in particular between 2:1 and 3:1. For example, for a panel thickness of 2 mm, the aperture between the lips of the drawing machine 2 will be between 4 and 6 mm.

A strip 5, consisting at least partially of fibres of thermoplastic material, is unwound from a storage reel 4 which is mounted rotatably parallel to the two calender rollers 103, 203 on braked expanding bars (not shown in detail), and this strip 5 is fed together with the panel 1 between the calender rollers 103, 203. In the example shown in Fig. 1, the reel 4 of strip 5 comprising fibres of thermoplastic material is disposed below the pair of calender rollers 103, 203, so that the strip 5 is superimposed on and is consequently fixed to the lower face of the said panel 1. The fixing takes place at the time of calendering between the rollers 103, 203, as a result of the compression of the strip 5 against the panel 1 and the simultaneous heating of the rollers to a temperature sufficient to cause partial fusion of the strip 5 of material consisting at least partially of fibres of thermoplastic material.

According to an improvement, before it reaches the calender rollers 103, 203 the strip 5 comprising the thermoplastic fibres may be subjected to a pre-heating stage using heating means 6, for example those of the type comprising electrical resistance heaters or of the infrared type, or similar.

The strip 5, consisting at least partially of fibres of thermoplastic material, may be applied to Woodstock panels 1 of any thickness. The strip 5 preferably consists of a felt, a fabric, a non-woven fabric, or similar, containing at least partially fibres of thermoplastic material.

Preferably, the fibres of thermoplastic material are polypropylene-based, and are mixable with other materials, in any form, but particularly where 0% to 50% of the said materials is also in the form of fibres. The strip 5 of felt, fabric, or non-woven fabric may advantageously have a 70% to 80% content of polypropylene fibres and a 20% to 30% content of other types of fibres, such as viscose, polyester, polyamide, cotton, jute, or similar, or glass fibre.

The weight of the strip 5 of fibres may. vary according to the specific applications from 30 to 1000 g/m². The best relationship between the weight of the strip and the characteristics of the finished composite panel is obtained with fibre strips from 100 to 250 g/m². The thicknesses of the strips may vary in direct proportion to the weight of the strip 5 from 0.3 to 1.0 mm, preferably from 1 to 3 mm.

In this case, the temperatures of the calender rollers 103, 203 are between 75 and 150°C, and preferably from 85 to 100°C, for the first, upper roller, while for the second they lie within the range from 85 to 150°C, or preferably from 90 to 100°C. The pressures exerted by the calender rollers 103, 203 are between 50 and 150 bar, and preferably between 70 and 80 bar, for both the first and the second roller.

A further improvement consists in the provision of a calender 3 consisting of three parallel calender rollers 103, 203, 303, rotating and aligned with each other vertically, and exerting specified pressures on the material which is made to pass between them.

The additional lower calender roller 303 enables an additional strip 8 to be joined to the panel 1 on the opposite side to that to which the strip 5 containing the thermoplastic fibres is joined. This second strip 8 is taken from a reel 7 supported rotatably and parallel to the calender rollers 103 to 303 and disposed above the calender rollers 103 to 303, and on the other side of the calender 3 away from the extrusion aperture 2. The reel 7 is also mounted on a core consisting of braked expanding bars.

The strip 8 may be a strip comprising fibres of thermoplastic material, or a felt, a fabric or a non-woven fabric of a type similar to the strip 5.

Alternatively, the strip 8 may be a film of thermoplastic material, in particular polypropylene, which is applied to the panel 1 to improve the fixing of a coating, for example of fabric, felt, simulated leather, or similar, to the composite panel on the opposite side to the layer of plasticized fibrous thermoplastic material 5. In this case, the third calender roller 303 is also heated to a temperature between 85 and 120°C, preferably between 85 and 95°C, while a pressure of between 50 and 150 bar, and preferably between 70 and 80 bar, is exerted.

Obviously, it is also possible, as an alternative to the configuration of the rollers 103, 203, 303 illustrated, to provide two pairs of rollers disposed in succession with respect to the direction of movement of the strip of material in the calender 3.

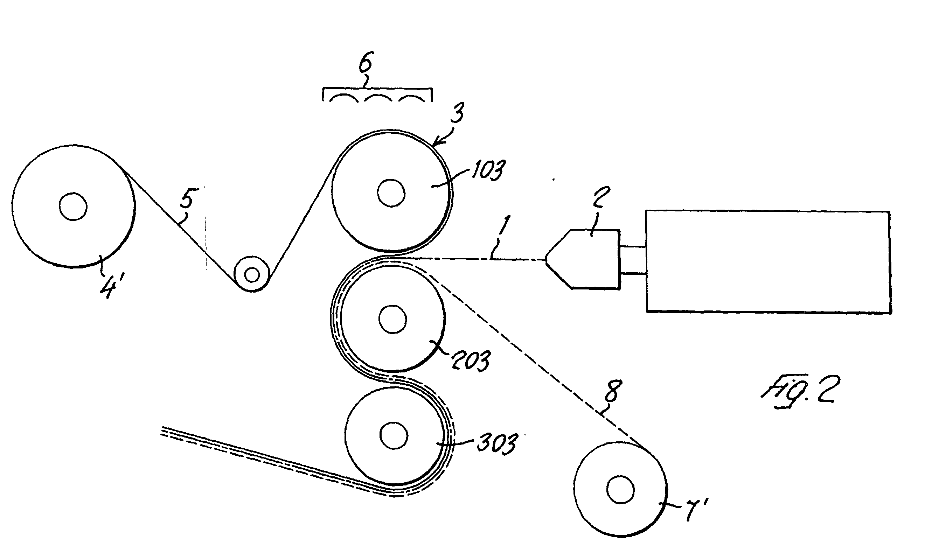

Fig. 2 shows a variant embodiment of the device as shown in Fig. 1. In this case, the reel 4' of strip 5 of thermoplastic fibres and the reel 7' for the additional strip or polypropylene film 8 are disposed in a way symmetrically opposite that shown in Fig. 1 with respect to the calender 3. Additionally, whereas in the device as shown in Fig. 1 the strip 5 containing the thermoplastic fibres was applied to the panel 1 between the upper roller 103 and the intermediate roller 203 and the additional strip of thermoplastic fibres or polypropylene film 8 was applied between the intermediate roller 203 and the lower roller 303, in the example in Fig. 2 the said panel 1, the strip 5 of thermoplastic fibres and the strip or film 8 are fed together between the upper calender roller 103 and the intermediate one 203 and are therefore joined together at the time of this first calendering pass.

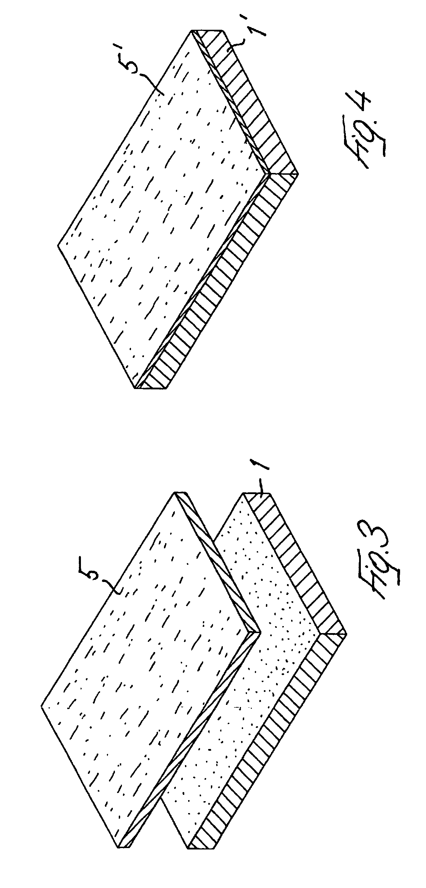

As shown in Figs. 3 and 4, the strip 5 of felt, fabric, or non-woven fabric, comprising the thermoplastic fibres and initially having a considerable thickness, is compressed against the panel 1 at the time of calendering and is simultaneously heated to a temperature which causes the partial fusion of the thermoplastic fibres. Once calendered, the strip comprising the thermoplastic fibres is fixed to the Woodstock panel 1, forming a composite panel of thermoplastic material with one layer 1' of filled polypropylene and one similar layer 5' of plastic or plasticized material with a lesser thickness than that of the strip 5. This layer 5' has a smooth outer surface and partially retains, both aesthetically and structurally, the marks of the pattern or structure of the fibres of the strip 5.

The two layers 1', 5' are fixed together by two different types of bond, namely a bond of the mechanical type due to the pressure exerted on the two panels, which causes interpenetration between the thermoplastic materials in their fused state and incorporation of the non-fused parts, in other words the non-fused fibres and fillers, so that, on cooling, the layers 1', 5' are fastened together; and a bond, due to the fact that part of the fused thermoplastic material, in particular the fused polypropylene component of one of the layers 1', is bonded with the fused thermoplastic material, or with the fused polypropylene of the other layer 5'.

## Claims

1. Composite panel of plastic material, comprising at least one first layer (1') of polypropylene filled with sawdust and/or wood flour and/or wood shavings and at least one additional layer (5') consisting at least partially of fibrous thermoplastic material,
**characterised in that**
- a) this additional layer (5') is applied to one face of the first layer (1) by compression and simultaneous partial fusion of the fibrous thermoplastic material and of the first layer providing
- b) a mechanical fixing of the two layers (1', 5') by interpenetration and incorporation of the non fused parts, in particular parts of fibre and/or filling
- c) and fixing by bonding of part of the fused fibrous thermoplastic material and of the thermoplastic material of the first layer which is also fused
- d) this additional layer (5') being after bonding similar to plastic material, with a substantially smooth surface which retains at least partially, whether for solely aesthetic or also for structural purposes, the fibrous pattern and/or structure
- e) the two layer being bond together by two heated calender rollers (103, 203), the one of which (103) being in contact to the first layer (1'), being heated at a temperature between 75 and 150°C, preferably between 85 and 100°C
- f) the second (203) of the said calender rollers being in contact to the additional layer (5'), being heated at a temperature of 85 to 150°C, preferably between 90 and 100°C;
g) the two rollers exerting a pressure of compression of the two layers (1', 5') one against the other between 50 and 150 bar, preferably between 70 and 80 bar.

2. Composite panel according to claim 1, **characterised in that** a further additional layer (8) comprising plasticized fibrous thermoplastic material, or a felt or a fabric or a non-woven fabric of the type similar to the additional layer (5) according to claim 1 is provided on the face of the first layer (1) opposite to the one bonded to the additional layer.

3. Composite panel of plastic material according to Claim 1, **characterized in that** it consists of three layers, namely one intermediate first layer (1') and two outer layers (5') containing at least partially the fibrous thermoplastic material or a single outer layer (5') containing at least partially the fibrous thermoplastic material on one side of the first layer (1') and on the other side of this layer a layer consisting of a film of thermoplastic material (8) also applied by compression against the first layer (1) and simultaneous heating which may be applied only to the film (8).

4. Composite panel of plastic material according to one or more of the preceding Claims 1 to 3, **characterized in that** the layer (5') containing the fibrous thermoplastic material consists partially of fibres of thermoplastic material in a proportion from 100% to 50% and preferably from 80% to 70%, and partially of other materials, particularly in the form of fibres, with a percentage content from 0% to 50%, preferably from 20% to 30%.

5. Composite panel of plastic material according to Claim 4, **characterized in that** the non-thermoplastic material part consists of fibres of viscose, polyester, polyamide, cotton, jute, glass fibre or other synthetic or natural materials, while the fibres of thermoplastic material consist of polypropylene.

6. Composite panel of plastic material according to one or more of the preceding claims, **characterized in that** the layer (5') comprising the fibrous thermoplastic material consists of: a felt of thermoplastic fibres, short or long, with random orientation; a fabric or non-woven fabric; or thermoplastic lattices or glass fibres; the said layer being compressed, and simultaneously heated to temperatures of partial or complete fusion of at least the fibrous thermoplastic material part and possibly of some or all of the other fibrous materials mixed with the first, against a panel (1) of filled polypropylene.

7. Composite panel of plastic material according to Claim 6, **characterized in that** the strip (5) of felt, fabric or non-woven fabric has, before fixing to the panel (1), a weight between 30 and 1000 g/m², preferably between 100 and 250 g/m², and a thickness between 0.3 and 10 mm, preferably between 1 and 3 mm.

8. Process for the fabrication of a composite panel of plastic material according to one or more of Claims 1 to 7 comprising a stage of extrusion of a panel (1) of filled polypropylene, a stage of superimposition of a layer (5) containing at least partially the fibrous thermoplastic material on the said panel (1), **characterized by** the subsequent compression of the two layers (1, 5) against each other, with the simultaneous heating of at least the layer (5) containing the fibres of thermoplastic material, and preferably of both the said layers (1, 5), to a temperature sufficient to ensure the partial fusion of at least the fibrous thermoplastic material and possibly of other components of the said layer (5) and the fixing of the two layers (1, 5) together by mechanical fixing, as a result of their interpenetration and the incorporation of their non-fused parts (1, 5), in particular of the non-fused fibres and fillers, and by fixing, as a result of the bonding of the fused thermoplastic components of the two layers (1, 5).

9. Process according to Claim 8, **characterized in that** the stage of compression and heating of the layer containing the fibrous material against the layer of filled polypropylene are executed at the stage of calendering of a strip (1) of filled polypropylene by heated calender rollers (103, 203, 303), the additional layer containing the fibrous thermoplastic material being applied during the said stage of calendering of the filled polypropylene panel (1), by feeding a strip (5) containing fibrous thermoplastic material between the calender rollers (103, 203) at the same time as the panel (1) and in such a way that it is superimposed on the panel.

10. Process according to Claim 9, **characterized in that** the strip (5) containing the fibrous thermoplastic material is subjected to a pre-heating stage (6) before it is fed to the calender (3).

11. Process according to Claims 8 to 10, **characterized in that** the calender rollers (103, 203) for joining the strip (5) to the panel (1) are heated to a temperature between 75 and 150°C, and preferably from 85 to 100°C, for the first roller (103), and to a temperature between 85 and 150°C, or preferably from 90 to 100°C, for the second roller (203).

12. Process according to Claim 11, **characterized in that** each of the calender rollers (103, 203) for the application of the strip (5) containing the fibres of thermoplastic material to the panel (1) exerts a pressure of between 50 and 150 bar, and preferably between 70 and 80 bar.

13. Process according to one or more of the preceding Claims 8 to 12, **characterized in that** the additional second layer containing the fibrous thermoplastic material or the layer of polypropylene are applied to the free side of the layer (1') of filled polypropylene by superimposition on this layer and compression with simultaneous heating of a strip (8) containing at least partially the fibrous thermoplastic material, or of a film (8) of thermoplastic material.

14. Device for the application of the method of fabrication according to Claims 8 to 13 of a composite panel of plastic material according to Claims 1 to 8, comprising:
- an extrusion head (2) for a panel (1) of thermoplastic material mixed with filler material, in particular polypropylene filled with sawdust and/or wood flour and/or wood shavings;
- a calender (3) with at least two calender rollers (103, 203) which can be heated and pressed against the panel (1) which is fed between them together with a strip (5) comprising fibrous thermoplastic material superimposed on the panel and unwound from a reel (4, 4') supported rotatably parallel to the rollers (103, 203) and interacting with means of braking the unwinding motion **characterized in that** means (6) of pre-heating the strip are provided before the calender (3) with respect to the direction of feeding of the strip (5, 8) to the calender.

## Patentansprüche

1. Kunststoffverbundplatte, umfassend wenigstens eine erste Schicht (1') aus Polypropylen, die mit Sägemehl und/oder Holzmehl und/oder Hobelspäne gefüllt ist, und wenigstens eine zusätzliche Schicht (5'), die wenigstens teilweise aus thermoplastischem Fasermaterial besteht,
**dadurch gekennzeichnet, dass**
a) diese zusätzliche Schicht (5') auf eine Seite der ersten Schicht (1') durch Druck und gleichzeitiges teilweises Schmelzen des thermoplastischen Fasermaterials und der ersten Schicht aufgebracht wird,
b) die zwei Schichten (1', 5') durch gegenseitige Durchdringung und Einarbeitung der nicht geschmolzenen Anteile, insbesondere Teile der Fasern und/oder der Füllung, mechanisch fixiert werden
c) und ein Teil des geschmolzenen thermoplastischen Fasermaterials und des ebenfalls geschmolzenen thermoplastischen Materials der ersten Schicht, durch Verkleben fixiert werden,
d) diese zusätzliche Schicht (5') nach dem Verkleben ähnlich wie Kunststoff mit einer im Wesentlichen glatten Oberfläche ist, die entweder das Fasermuster und/oder die Faserstruktur nur für ästhetische oder auch für strukturelle Zwecke wenigstens teilweise beibehält,
e) die zwei Schichten mittels zwei erwärmter Kalanderwalzen (103, 203), von denen die eine (103) mit der ersten Schicht (1') in Kontakt kommt und welche auf eine Temperatur zwischen 75 und 150° C, vorzugsweise zwischen 85 und 100° C, erwärmt werden, miteinander verbunden werden,
f) die zweite (203) der Kalanderwalzen, die mit der zusätzlichen Schicht (5') in Kontakt kommt, auf eine Temperatur von 85 bis 150° C, vorzugsweise zwischen 90 und 100° C, erwärmt wird,
g) die zwei Walzen beim Zusammendrücken der zwei Schichten (1', 5') aufeinander einen Druck zwischen 50 und 150 bar, vorzugsweise zwischen 70 und 80 bar, ausüben.

2. Kunststoffverbundplatte nach Anspruch 1,
**dadurch gekennzeichnet, dass**
eine weitere zusätzliche Schicht (8), umfassend ein plastifiziertes thermoplastisches Fasermaterial oder einen Filz oder ein Fasergewebe oder ein nicht gewebtes Fasergewebe, die ähnlich zu der zusätzlichen Schicht (5) nach Anspruch 1 ist, auf der Seite der ersten Schicht (1), die sich gegenüber derjenigen Seite befindet, die mit der zusätzlichen Schicht verbunden ist, vorgesehen ist.

3. Kunststoffverbundplatte nach Anspruch 1,
**dadurch gekennzeichnet, dass**
sie aus drei Schichten besteht, nämlich einer ersten Zwischenschicht (1') und zwei Außenschichten (5'), die wenigstens teilweise das thermoplastische Fasermaterial enthatten, oder einer einzelnen Außenschicht (5'), die wenigstens teilweise das thermoplastische Fasermaterial enthält, auf einer Seite der ersten Schicht (1'), und auf der anderen Seite dieser Schicht eine Schicht aus einer Folie aus thermoplastischem Material (8), welche auch durch Pressen gegen die erste Schicht (1) und gleichzeitiges Erhitzen, das nur für die Folie (8), durchgeführt werden kann, aufgebracht ist.

4. Kunststoffverbundplatte nach einem oder mehreren der vorhergehenden Ansprüche 1 bis 3,
**dadurch gekennzeichnet, dass**
die Schicht (5'), welche das thermoplastische Fasermaterial enthält, teilweise aus Fasern eines thermoplastischen Materials, nämlich zu 100 % bis 50 % und vorzugsweise zu 80 % bis 70 %, und teilweise aus anderen Materialien, insbesondere in Form von Fasern, nämlich zu 0 % bis 50 %, vorzugsweise zu 20 % bis 30 %, besteht.

5. Kunststoffverbundplatte nach Anspruch 4,
**dadurch gekennzeichnet, dass**
der Anteil an nicht thermoplastischem Material aus Fasern aus Viskose, Polyester, Polyamid, Baumwolle, Jute, Glasfaser oder anderen synthetischen oder natürlichen Materiallen besteht, während die Fasern des thermoplastischen Materials aus Polypropylen bestehen.

6. Kunststoffverbundplatte nach einem oder mehreren der vorhergehenden Ansprüche,
**dadurch gekennzeichnet, dass**
die Schicht (5'), umfassend das thermoplastische Fasermaterial, aus einem Filz aus thermoplastischen Fasern, kurz oder lang, von zufälliger Anordnung, einem Fasergewebe oder einem nicht gewebten Fasergewebe; oder thermoplastischen Gittern oder Glasfasern besteht, wobei die Schicht gegen eine Platte (1) aus gefülltem Polypropylen gepresst und gleichzeitig auf Temperaturen erwärmt wird, bei denen ein teilweises oder vollständiges Schmelzen wenigstens des Antells des thermoplastischen Fasermaterials und möglicherweise von einigen oder allen der anderen Fasermateriallen, die mit dem ersten gemischt sind, erfolgt.

7. Kunststoffverbundplatte nach Anspruch 6,
**dadurch gekennzeichnet, dass**
das Band (5) aus Filz, Fasergewebe oder nicht gewebtem Fasergewebe vor dem Fixieren an die Platte (1) ein Gewicht zwischen 30 und 1000 g/m², vorzugsweise zwischen 100 und 250 g/m², und eine Dicke zwischen 0,3 und 10 mm, vorzugsweise zwischen 1 und 3 mm, aufweist.

8. Verfahren zur Herstellung einer Kunststoffverbundplatte nach einem oder mehreren der Ansprüche 1 bis 7, umfassend einen Schritt des Extrudierens einer Platte (1) aus gefülltem Polypropylen, einen Schritt des Übereinanderlegens einer Schicht (5), die wenigstens teilweise das thermoplastische Fasermaterial enthält, auf die Platte (1),
**gekennzeichnet durch**
das aufeinanderfolgende Pressen der zwei Schichten (1, 5) und gleichzeitiges Erwärmen wenigstens der Schicht (5), welche die Fasern des thermoplastischen Materials enthält, und vorzugsweise beider Schichten (1, 5) auf eine Temperatur, die ausrelchend ist, um ein teilweises Schmelzen wenigstens des thermoplastischen Fasermaterials und möglicherweise von anderen Komponenten der Schicht (5) sicherzustellen, und Fixieren der zwei Schichten (1, 5) **durch** mechanisches Fixieren, als Ergebnis ihres gegenseitigen Durchdringens und der Einarbeitung ihrer nicht geschmolzenen Anteile (1, 5), insbesondere der nicht geschmolzenen Fasern und Füllstoffe, und **durch** Fixieren als Ergebnis des Verklebens der geschmolzenen thermoplastischen Komponenten der zwei Schichten (1, 5).

9. Verfahren nach Anspruch 8,
**dadurch gekennzeichnet, dass**
der Schritt des Pressens und Erwärmens der Schicht, welche das Fasermaterial enthält, gegen die Schicht aus gefülltem Polypropylen beim Schritt des Kalandrierens eines Bandes (1) aus gefülltem Polypropylen durch erwärmte Kalanderwalzen (103, 203, 303) durchgeführt wird, wobei die zusätzliche Schicht, welche das thermoplastische Fasermaterial enthält, während dem Schritt des Kalandrierens der gefüllten Polypropylenplatte (1) aufgebracht wird, Indem ein Band (5), welches das thermoplastische Fasermaterial enthält, gleichzeitlg der Platte (1) zwischen den Kalanderwalzen (103, 203) auf eine solche Art und Weise zugeführt wird, dass dieses die Platte überlagert.

10. Verfahren nach Anspruch 9,
**dadurch gekennzeichnet, dass**
das Band (5), welches das thermoplastische Fasermaterial enthält, einem Vorheizschritt (6) unterzogen wird, bevor es dem Kalander (3) zugeführt wird.

11. Verfahren nach den Ansprüchen 8 bis 10,
**dadurch gekennzeichnet, dass**
die Kalanderwalzen (103, 203) zum Verbinden des Bandes (5) mit der Platte (1) im Falle der ersten Walze (103) auf eine Temperatur zwischen 75 und 150° C und vorzugsweise von 85 bis 100° C und im Falle der zweiten Walze (203) auf eine Temperatur zwischen 85 und 150° C oder vorzugsweise von 90 bis 100° C erwärmt werden.

12. Verfahren nach Anspruch 11,
**dadurch gekennzeichnet, dass**
jede der Kalanderwalzen (103, 203) für das Aufbringen des Bandes (5), welches die Fasern aus thermoplastischem Material enthält, auf die Platte (1) einen Druck zwischen 50 und 150 bar und vorzugsweise zwischen 70 und 80 bar ausübt.

13. Verfahren nach einem oder mehreren der vorhergehenden Ansprüche 8 bis 12,
**dadurch gekennzeichnet, dass**
die zusätzliche zweite Schicht, weiche das thermoplastische Fasermaterial oder die Schicht aus Polypropylen enthält, auf die freie Seite der Schicht (1') aus gefülltem Polypropylen durch Überlagern mit dieser Schicht und Zusammenpressen bei gleichzeitigem Erwärmen eines Bandes (8), das wenigstens teilweise das thermoplastische Fasermaterial enthält oder einer Folie (8) aus thermoplastischem Material, aufgebracht wird.

14. Vorrichtung zur Verwendung des Verfahrens nach den Ansprüchen 8 bis 13 zur Herstellung einer Kunststoffverbundplatte nach den Ansprüchen 1 bis 8, umfassend:
- einen Spritzkopf (2) für eine Platte (1) aus mit einem Füllmaterial gemischten thermoplastischen Material, insbesondere aus Polypropylen, das mit Sägemehl und/oder Holzmehl oder Hobelspänen gefüllt ist,
- einen Kalander (3) mit wenigstens zwel Kalanderwalzen (103, 203), die erwärmt und gegen die Platte (1) gepreßt werden können, die zwischen diesen zusammen mit einem Band (5), welches das thermoplastische Fasermaterial enthält, mit dem die Platte überlagert ist, zugeführt und von einer Rolle (4, 4') abgerollt wird, die drehbar parallel zu den Walzen (103, 203) angeordnet ist und durch Abbremsen der Abrollbewegung wirkt.

## Revendications

1. Panneau composite de matière plastique, comportant au moins une première couche (1') de polypropylène chargé à l'aide de sciure et/ou de farine de bois et/ou de copeaux de bois et au moins une couche supplémentaire (5') constituée au moins partiellement d'une matière thermoplastique fibreuse, **caractérisé en ce que** :
- a) cette couche supplémentaire (5') est appliquée sur une première face de la première couche (1) par compression et fusion partielle simultanée de la matière thermoplastique fibreuse et de la première couche, fournissant
- b) une fixation mécanique des deux couches (1', 5') par interpénétration et incorporation des parties non-fondues, dans des parties particulaires de fibre et/ou de charge,
- c) et fixer par liaison d'une partie de la matière thermoplastique fibreuse fondue et de la matière thermoplastique de la première couche qui est aussi fondue,
- d) cette couche supplémentaire (5') étant, après liaison, similaire à une matière plastique, ayant une surface sensiblement lisse qui garde au moins partiellement, à des fins purement esthétiques ou aussi à des fins de structure, le motif fibreux et/ou la structure fibreuse,
- e) les deux couches étant liées ensemble par deux cylindres de calandre chauffés (103, 203), dont le premier (103) est en contact avec la première couche (1'), et est chauffé à une température comprise entre 75 et 150°C, de préférence entre 85 et 100°C,
- f) le second (203) desdits cylindres de calandre en contact avec la couche supplémentaire (5') étant chauffé à une température de 85 à 150°C, de préférence entre 90 et 100°C,
- g) les deux cylindres exerçant une pression de compression des deux couches (1', 5') l'une contre l'autre située entre 50 × 10⁵ et 150 × 10⁵ Pa (5 et 150 bars), de préférence entre 70 × 10⁵ et 80 × 10⁵ Pa (70 et 80 bars).

2. Panneau composite selon la revendication 1, **caractérisé en ce qu'**une autre couche supplémentaire (8) constituée d'une matière thermoplastique fibreuse plastifiée, ou d'un feutre ou d'un tissu ou d'un tissu non-tissé du type similaire à la couche supplémentaire (5) selon la revendication 1, est agencée sur la face de la première couche (1) opposée à celle liée à la couche supplémentaire.

3. Panneau composite de matière plastique selon la revendication 1, **caractérisé en ce qu'**il est constitué de trois couches, à savoir une première couche intermédiaire (1') et deux couches extérieures (5') contenant au moins partiellement la matière thermoplastique fibreuse, ou une seule couche extérieure (5') contenant au moins partiellement la matière thermoplastique fibreuse sur un côté de la première couche (1') et sur l'autre côté de cette couche une couche constituée d'un film de matière thermoplastique (8) également appliquée par compression contre la première couche (1) et par chauffage simultané qui peut être appliqué uniquement sur le film (8).

4. Panneau composite de matière plastique selon l'une quelconque des revendications 1 à 3, **caractérisé en ce que** la couche (5') contenant la matière thermoplastique fibreuse est constituée partiellement de fibres de matière thermoplastique dans une proportion allant de 100 % à 50 % et de préférence allant de 80 % à 70 %, et partiellement d'autres matières, en particulier sous la forme de fibres, dont le contenu en pourcentage est de 0 % à 50 %, de préférence de 20 % à 30 %.

5. Panneau composite de matière plastique selon la revendication 4, **caractérisé en ce que** la partie de matière non-thermoplastique est constituée de fibres de viscose, de polyester, de polyamide, de coton, de jute, de fibres de verre ou d'autres matières synthétiques ou naturelles, alors que les fibres de matière thermoplastique sont constituées de polypropylène.

6. Panneau composite de matière plastique selon l'une quelconque des revendications précédentes, **caractérisé en ce que** la couche (5') comportant la matière thermoplastique fibreuse est constituée de : un feutre de fibres thermoplastiques, courtes ou longues, ayant une orientation aléatoire, un tissu ou un tissu non-tissé, ou des treillis ou fibres de verre thermoplastiques, ladite couche étant comprimée, et simultanément chauffée à des températures de fusion partielle ou complète d'au moins la partie de matière thermoplastique fibreuse et de manière possible de certaines ou de la totalité des autres matières fibreuses mélangées à la première, contre un panneau (1) de polypropylène chargé.

7. Panneau composite de matière plastique selon la revendication 6, **caractérisé en ce que** la bande (5) de feutre, de tissu ou de tissu non-tissé a, avant fixation sur le panneau (1), un poids compris entre 30 et 1000 g/m², de préférence entre 100 et 250 g/m², et une épaisseur comprise entre 0,3 et 10 mm, de préférence entre 1 et 3 mm.

8. Procédé de fabrication d'un panneau composite de matière plastique selon l'une quelconque des revendications 1 à 7, comportant une étape d'extrusion d'un panneau (1) de polypropylène chargé, une étape de superposition d'une couche (5) contenant au moins partiellement la matière thermoplastique fibreuse sur ledit panneau (1), **caractérisé en ce que** la compression ultérieure des deux couches (1, 5) l'une contre l'autre, avec chauffage simultané d'au moins la couche (5) contenant les fibres de matière thermoplastique, et de préférence des deux dites couches (1, 5), à une température suffisante pour assurer la fusion partielle d'au moins la matière thermoplastique fibreuse et de manière possible des autres composants de ladite couche (5) et la fixation des deux couches (1, 5) ensemble par fixation mécanique, en résultat de leur interpénétration et de l'incorporation de leurs parties non-fondues (1, 5), en particulier des fibres et charges non-fondues, et par fixation, en résultat de la liaison des composants thermoplastiques fondus des deux couches (1, 5).

9. Procédé selon la revendication 8, **caractérisé en ce que** l'étape de compression et de chauffage de la couche contenant la matière fibreuse contre la couche de polypropylène chargé est exécutée au niveau de l'étape de calandrage d'une bande (1) de polypropylène chargé, par des cylindres de calandre chauffés (103, 203 ; 303), la couche supplémentaire contenant la matière thermoplastique fibreuse étant appliquée pendant ladite étape de calandrage du panneau de polypropylène chargé (1), en acheminant une bande (5) contenant une matière thermoplastique fibreuse entre les cylindres de calandre (103, 203) en même temps que le panneau (1), et de manière telle qu'elle soit superposée au panneau.

10. Procédé selon la revendication 9, **caractérisé en ce que** la bande (5) contenant la matière thermoplastique fibreuse est soumise à une étape de préchauffage (6) avant d'être acheminée vers la calandre (3).

11. Procédé selon l'une quelconque des revendications 8 à 10, **caractérisé en ce que** les cylindres de calandre (103, 203) destinés à relier la bande (5) au panneau (1) sont chauffés à une température comprise entre 75 et 150°C, et de préférence de 85 à 100°C pour le premier cylindre (103) et à une température comprise entre 85 et 150°C, ou de préférence de 90 à 100°C pour le second cylindre (203).

12. Procédé selon la revendication 11, **caractérisé en ce que** chacun des cylindres de calandre (103, 203) destinés à l'application de la bande (5) contenant les fibres de matière thermoplastique sur le panneau (1) exerce une pression comprise entre 50 et 150 × 10⁵ Pa (50 et 150 bars) et de préférence entre 70 et 80 × 10⁵ Pa (70 et 80 bars).

13. Procédé selon l'une quelconque des revendications 8 à 12, **caractérisé en ce que** la seconde couche supplémentaire contenant la matière thermoplastique fibreuse ou la couche de polypropylène sont appliquées sur le côté libre de la couche (1') de polypropylène chargé par superposition sur cette couche et compression avec chauffage simultané d'une bande (8) contenant au moins partiellement la matière thermoplastique fibreuse, ou d'un film (8) de matière thermoplastique.

14. Dispositif pour l'application du procédé de fabrication selon l'une quelconque des revendications 8 à 13 d'un panneau composite de matière plastique selon l'une quelconque des revendications 1 à 8, comportant :
- une tête d'extrusion (2) d'un panneau (1) de matière thermoplastique mélangée avec une matière de charge, dans du polypropylène particulaire chargé de sciure et/ou de farine de bois et/ou de copeaux de bois,
- une calandre (3) ayant au moins deux cylindres de calandre (103, 203) qui peuvent être chauffés et appuyés contre le panneau (1) qui est acheminé entre ceux-ci en même temps qu'une bande (5) comportant une matière thermoplastique fibreuse superposée sur le panneau et déroulée à partir d'une bobine (4, 4') supportée de manière rotative parallèlement aux cylindres (103, 203) et interagissant avec des moyens de freinage du mouvement de déroulement, **caractérisé en ce que** des moyens (6) de préchauffage de la bande sont agencés avant la calandre (3) par-rapport à la direction d'acheminement de la bande (5, 8) vers la calandre.
